# EUROPÄISCHE PATENTSCHRIFT

(11) **EP 4 473 221 B1**
(45) Veröffentlichungstag und Bekanntmachung des Hinweises auf die Patenterteilung: **07.10.2026**
(21) Anmeldenummer: 22706728.7
(22) Anmeldetag: 04.02.2022
(51) Int. Cl.: F15B 11/20, F15B 15/14

(54) **ARBEITSZYLINDER MIT DRUCKMEDIUMÜBERSTRÖMUNG**
WORKING CYLINDER WITH PRESSURE MEDIUM OVERFLOW
CYLINDRE DE TRAVAIL À DÉBORDEMENT DE FLUIDE SOUS PRESSION

(43) Veröffentlichungstag der Anmeldung: 11.12.2024
(73) Patentinhaber: Bümach Engineering International B.V., 7826 TA Emmen (NL)
(72) Erfinder: BUETER, Josef, 49733 Haren/Altenberge (DE)
(74) Vertreter: Weihrauch, Frank
(86) Internationale Anmeldenummer: PCT/DE2022/000011
(87) Internationale Veröffentlichungsnummer: WO 2023/147797

(56) Entgegenhaltungen:
- EP-A1- 2 956 678
- DE-A1- 102005 035 633
- SE-B- 441 117

## Beschreibung

Die Erfindung betrifft einen doppeltwirkenden hydraulischen Arbeitszylinder mit einer Druckmediumüberströmung zwischen den Arbeitsräumen in vorzugsweise beiden Endlagen des Kolbens.

Nach dem Stand der Technik sind Lösungen bekannt, bei Arbeitszylindern in einer Endlage oder in beiden Endlagen des Kolbens Überströmungen des Druckmittels zuzulassen. Dem liegt das Erfordernis zu Grunde, für bestimmte Anwendungen wie beispielsweise bei Master-Slave-Systemen oder Systemen mit Hydrospeichern aus dem einen Druckraum Druckmittel in den anderen Druckraum zu überführen um beispielsweise Leckstromverluste auszugleichen oder einen Druckausgleich bereitzustellen.

Es sind hierbei im Stand der Technik beispielsweise in dem Kolben von Arbeitszylindern angeordnete Ventilsysteme bekannt, die federbelastete Ventilkörper mit einem Stößel aufweisen. In einer Hubstellung des Kolbens sind die Ventilkörper unbetätigt und geschlossen. Erreicht der Kolben eine Endlage, wird das entsprechende Ventil geöffnet, indem der Stößel in Druckkontakt mit der Innenseite eines Verschlussteils des Zylinderrohrs tritt und den Ventilkörper betätigt, so dass das Druckmittel vom aus dem druckbeaufschlagen Arbeitsraum in den anderen Arbeitsraum überströmen kann.

Eine solche Lösung beschreibt die Druckschrift DE 30 13 381 C2. Im Arbeitskolben sind hierbei zwei durch Stößel betätigbare Ventile angeordnet, die jeweils kurz vor dem jeweiligen Endanschlag des Kolbens an einem Verschlussteil des Zylinderrohrs zur Verbindung des Arbeitsraums mit dem Rücklaufanschluss aufgesteuert werden, um Beschädigungen der Bauteile zu verhindern.

Aus der Druckschrift DE 83 24 442 U1 geht die Anordnung eines Rückschlagventils im Kolben und einer inneren Verbindungsleitung im Kolben und der Kolbenstange einer doppeltwirkenden Kolben-Zylinder-Einheit zum Druckausgleich mit einem Hydrospeicher hervor. Die Hydrospeicherladung und der Druckmittelverlustausgleich zwischen dem Kolben- und Kolbenstangenraum erfolgt in der eingefahrenen Endlage des Kolbens bei Beaufschlagung mit einem Druckmittel über den Hauptanschluss des Arbeitszylinders.

In der Druckschrift DE 12 79 908 A ist ein doppeltwirkender hydraulischer Hubzylinder mit beidseitig aus dem Kolben hervorstehenden Ventilspindeln bekannt. Die Ventilspindeln sind ungleich lang, wodurch beim Erreichen der jeweiligen Endlage des Kolbens ein zweistufiger Druckausgleich zwischen den Arbeitsräumen erfolgt.

Eine weitere Anordnung eines durch Stößel gesteuerten Ventils im Kolben eines Arbeitszylinders wird in der Druckschrift DE 2 245 129 A offenbart. In der Nähe der Endlagen des Kolbens öffnet der jeweilige Stößel im Kontakt mit der Innenwandung des Verschlussteils das Ventil, beide Arbeitsräume des Arbeitszylinders werden miteinander verbunden, wodurch mit dem Überströmen des Druckmittels der Druckausgleich erfolgt.

Die Druckschrift DE 10 2005 008 070 A1 hat einen Hydrozylinder zum Gegenstand, dessen Kolben eine Ventilanordnung zum Druckausgleich zwischen den Arbeitsräumen aufweist. Die Ventile werden in der Nähe der Endlagen des Kolbens ebenfalls mit Hilfe von Stößeln geöffnet, so dass Druckmittel zwischen den Arbeitsräumen des Hydrozylinders überströmen kann.

Alle genannten Ventilanordnungen im Kolben eines Arbeitszylinders weisen symmetrisch ausgeführte Ventilanordnungen auf, die mit Hilfe von Stößeln kurz vor Erreichen der jeweiligen Endlage des Kolbens die mit Federn vorbelasteten Ventilkörper aus deren Sitz abheben, eine Verbindung zwischen den Arbeitsräumen hergestellt wird und zum Druckausgleich ein Überströmen des Druckmediums erfolgt.

Der konstruktiv bedingte Aufwand und der relativ geringe Querschnitt zum Überströmen des Druckmittels sowie der durch die räumlichen Gegebenheiten im Kolben vorhandene Einbauraum der Ventilbauteile begrenzen den möglichen Einsatzbereich der beschriebenen Lösungen.

Die Druckschrift EP 3 610 160 B1 beschreibt eine neue Lösung der Bümach Engineering International B. V. mit einem doppelt wirkenden Überströmventil, die eine präzise Einstellung des Überströmquerschnitts ermöglicht.

DE 10 2005 035633 A1 offenbart einen anderen bekannten Arbeitszylinder.

Die Aufgabe der Erfindung ist es, eine konstruktiv günstige Lösung für eine definierbare Druckmediumüberströmung zwischen den Arbeitsräumen eines doppeltwirkenden hydraulischen Arbeitszylinders in definierbaren Lagen, insbesondere in den Endlagen des Kolbens zu entwickeln, die eine hohe Betriebssicherheit und einen geringen Verschleiß aufweist..

Die Aufgabe wird durch die im Patentanspruch 1 aufgeführten Merkmale gelöst. Bevorzugte Weiterbildungen ergeben sich aus den Unteransprüchen.

Der erfindungsgemäße Arbeitszylinder mit Druckmediumüberströmung, weist gattungsgemäß ein Zylinderrohr, ein erstes und ein zweitens Verschlussteil, einen Innenraum, einen ersten und einen zweiten Arbeitsraum, einen ersten und zweiten Druckmittelanschluss und eine Kolbeneinheit auf.

Es handelt sich um einen Arbeitszylinder, der durch einen Druckstrom betrieben eine lineare Bewegung einer Kolbeneinheit bereitstellt. Vorzugsweise ist der Arbeitszylinder als ein Hydraulikzylinder ausgebildet. Dieser kann insbesondere als ein Differenzialarbeitszylinder aber auch als ein Gleichgangzylinder oder in einer anderen Ausbildung vorliegen.

Der Innenraum des Arbeitszylinders wird durch das Zylinderrohr und die beiden Verschlussteile ausgebildet. Das Druckmedium wird über zwei Druckmittelanschlüsse in den Zylinder betriebszustandsabhängig hinein- oder herausgeleitet. Der erste Druckmittelanschluss ist dem ersten Arbeitsraum und der zweite Druckmittelanschluss dem zweiten Arbeitsraum zugeordnet. Die Druckmittelanschlüsse stellen außenseitig Anschlussmöglichkeiten insbesondere für Hydraulikschläuche oder Hydraulikleitungen bereit.

Die Kolbeneinheit besteht aus einem Kolben und einer Kolbenstange, die form- oder kraftschlüssig in einer Längsachse miteinander verbunden sind. Die Kolbeneinheit kann auch monolithisch ausgebildet sein. Der Kolben ist in dem Innenraum angeordnet und bewegt sich entlang der Längsachse des Zylinders. Dieser teilt dort den Innenraum in den ersten und den zweiten Arbeitsraum. Die Kolbenstange der Kolbeneinheit durchdringt das als Führungsverschlussteil ausgebildete Verschlussteil und bietet die Möglichkeit der Kraftübertragung auf Komponenten außerhalb des Innenraums.

An seiner Außenmantelfläche, die die Gleitfläche zu der Innenmantelfläche des Zylinderrohrs darstellt, weist der Kolben eine umlaufende erste Innenringnut auf. In dieser ersten Innenringnut ist eine Dichtung angeordnet, die an einer Zylinderinnenwandung des Zylinderrohrs anliegt und den ersten und den zweiten Arbeitsraum voneinander trennt und zueinander abdichtet.

Durch das wechselnde Ein- bzw. Abströmen des Druckmediums in die Arbeitsräume, führt die Kolbeneinheit die Hubbewegungen aus, wobei die Dichtung durch ihr Gleiten an der Zylinderrohrinnenwandung die Arbeitsräume auch während der Hubbewegung getrennt hält.

Der Arbeitszylinder mit Druckmedienüberströmung ist erfindungsgemäß insbesondere wie nachfolgend beschrieben gekennzeichnet.

Die Dichtung in der ersten Innenringnut weist erfindungsgemäß ein axiales Bewegungsspiel auf. Dies bedeutet, dass sie definiert durch die Breite der ersten Innenringnut in dieser axial unterschiedliche Positionen einnehmen kann.

Weiterhin weist der Kolben eine umlaufende zweite Innenringnut und einen darin angeordneten Kolbenring auf. Dieser liegt federnd an der Zylinderrohrinnenwandung an. Erfindungsgemäß weist der Kolbenring einen Kolbenringspalt auf, so dass der Kolbenringspalt einen Öffnungsquerschnitt bildet.

Erfindungsgemäß weist zudem das Zylinderrohr an der Zylinderrohrinnenwandung eine Ausnehmung auf, die axial so angeordnet ist, dass diese in einer Endlage des Kolbens an dem ersten Verschlussteil der ersten Innenringnut gegenüber positioniert ist. Bei der Ausnehmung kann es sich vorzugsweise um eine einfache Bohrung von geringer Tiefe handeln. Ferner sind andere Ausführungen wie Keilnuten, Halbrundnuten, Spiralnuten oder andere konkave Geometrien möglich. Die Ausnehmung ist dabei stets so ausgebildet und positioniert, dass diese bei genau gegenüberliegender erster Innenringnut in Abhängigkeit von der bewegungsspielabhängigen axialen Position der Dichtung einen Öffnungsquerschnitt für das Druckmedium bereitstellt, der nachfolgend als Überströmungsquerschnitt bezeichnet wird.

Zudem ist der Arbeitszylinder für einen Überströmbetriebszustand und für einen Hubbetriebszustand ausgebildet.

In dem Überströmbetriebszustand ist der Kolben axial in einer Endlage an dem ersten Verschlussteil positioniert. Es handelt sich in dem Überströmungsbetriebszustand um die Hubendlage des durch den zweiten Arbeitsraum betätigten Hubs.

In dem Überströmbetriebszustand wird die Dichtung wird mittels einer Druckbeaufschlagung des zweiten Arbeitsraums in einer in Richtung des ersten Verschlussteils distalen Spielendlage ihres axialen Bewegungsspiels positioniert. Dabei entsteht ein Überströmungsquerschnitt, der zwischen einer radialen Begrenzung der Dichtung und der Ausnehmung geöffnet ist. Weiterhin ergibt sich ein Überströmkanal im Verlauf von dem zweiten Druckmittelanschluss über den zweiten Arbeitsraum, über den Überströmungsquerschnitt und den Kolbenringspalt, entlang des ersten Arbeitsraums hin zu dem ersten Druckmittelanschluss. Von der vorliegenden Erfindung umfasst ist dabei jede serielle Anordnung von Überströmungsquerschnitt und Kolbenringspalt unabhängig davon, ob das Druckmedium in dem Überströmkanal zuerst den Überströmquerschnitt und dann den Kolbenringspalt oder umgekehrt durchströmt.

Erfindungswesentlich bildet der Kolbenringspalt in dem Überströmquerschnitt einen Drosselquerschnitt für das Druckmedium aus und entlastet so die Dichtung am Überströmquerschnitt.

In dem Hubbetriebszustand befindet sich der Kolben außerhalb der Hubendlage. Im Hubbetriebszustand liegt eine Druckbeaufschlagung des ersten Arbeitsraums vor. Die Dichtung wird mittels der Druckbeaufschlagung des ersten Arbeitsraums in einer der distalen Spielendlage gegenüberliegenden proximalen Spielendlage positioniert. Der Überströmquerschnitt und somit der Überströmkanal sind dabei geschlossen. Somit wird bereits in der Hubanfangslage eine vollständige Abdichtung erreicht und ein Ausfahren aus der Hubanfangslage ohne Druckstromverlust ermöglicht.

Durch das Überströmen des Druckmediums in der Hubendlage des Kolbens und in Kombination mit dem definierten Ringspalt des Kolbenrings, ist ein begrenzter Druckmittelüberstrom gegeben.

Dadurch steigt als Vorteil der Druck im gesamten Hydrauliksystem bei Erreichen der Endlage nicht sprunghaft gegen den maximalen Hydraulikdruck an, sodass die gesamte Anlage entlastet wird.

Als weiterer Vorteil werden die Strömungszustände an dem Überströmungsquerschnitt durch den seriell als Drossel wirkenden Kolbenringspalt entlastet. Zum einen wird unmittelbar die vergleichsweise empfindliche Dichtung, die einen Abschnitt der Wandungen des Überströmquerschnitts ausbildet, geschont so dass diese wesentlich geringer verschleißt, als wenn die der Überströmquerschnitt selbst die Drosselwirkung aufbringen muss. Zum zweiten werden die Druckschwankungen und Scherbelastungen des Druckmediums beim Druckströmen des Überströmquerschnitts verringert.

Vorteilhaft wird damit insbesondere der nach den Stand der Technik mögliche Dieseleffekt vermieden. Bei dem Dieseleffekt wird durch hohe Druckspitzen und häufig im Zusammenwirken mit Kavitationen im Druckmedium in Bläschen gebildetes Luft-Öl-Aerosol derart komprimiert, dass durch die Überhitzung die Öl-Partikel in den Bläschen der Selbstzündung unterliegen und verbrennen. Zu den negativen Wirkungen zählen neben einer vorzeitigen Alterung des Druckmediums auch mögliche Beschädigungen an der hydraulischen Anlage selbst.

Bei der vorliegenden Erfindung ist ein solcher Effekt aufgrund der druckentlastenden Überstrommöglichkeit des Druckmediums ausgeschlossen. Zudem wird der Verschleiß aller druckmitteldurchströmten Anlagenteile minimiert.

Vorteilhaft kann auch bei der Anordnung mehrere paralleler Arbeitszylinder gleicher Baugröße kann ein Erreichen der Endlage aller Zylinder garantiert werden. Die durch Fading, Reibung, Fertigungstoleranzen oder anderweitigen Störeinflüsse verursachte geringfügig Bewegungsgeschwindigkeit der parallel geschalteten Arbeitszylinder kann durch das Überströmen kompensiert werden und alle Zylinder erreichen die Endlage.

Weiterhin kann der erfindungsgemäße Arbeitszylinder mit Druckmediumüberströmung auch als Masterzylinder in einer Master-Slave-Anordnung eine ordnungsgemäße Betriebsweise des Masterzylinders und des Slavezylinders gewährleisten.

Gemäß einer vorteilhaften Weiterbildung des Arbeitszylinders mit Druckmediumüberströmung nach Anspruch 1 ist dieser dadurch gekennzeichnet, dass das Zylinderrohr an der Zylinderrohrinnenwandung eine weitere Ausnehmung aufweist. Diese ist axial so angeordnet, dass in einer Endlage des Kolbens die Ausnehmung an dem zweiten Verschlussteil der ersten Innenringnut gegenüber positioniert ist. Somit ist der Arbeitszylinder für einen weiteren Überströmbetriebszustand und für einen weiteren Hubbetriebszustand ausgebildet. In dem weiteren Überströmbetriebszustand ist der Kolben in einer Endlage an dem zweiten Verschlussteil positioniert. Die Dichtung wird mittels einer Druckbeaufschlagung des ersten Arbeitsraums in einer in Richtung des zweiten Verschlussteils in einer distalen Spielendlage ihres axialen Bewegungsspiels positioniert. Ein weiterer Überströmungsquerschnitt wird zwischen der radialen Begrenzung der Dichtung und der weiteren Ausnehmung geöffnet. Daraus ergibt sich ein weiterer Überströmkanal, der von dem ersten Druckmittelanschluss verlaufend über den ersten Arbeitsraum, weiter über den weiteren Überströmungsquerschnitt und den Kolbenringspalt, über den zweiten Arbeitsraum hin zu dem zweiten Druckmittelanschluss geöffnet ist. In dem weiteren Hubbetriebszustand ist die Dichtung mittels einer Druckbeaufschlagung des zweiten Arbeitsraums in einer der weiteren distalen Spielendlage gegenüberliegenden weiteren proximalen Spielendlage positioniert. Der weitere Überströmquerschnitt und der weitere Überströmkanal sind dabei geschlossen.

Die Lagebezeichnungen distal und proximal werden in der vorliegenden Anmeldung in Abhängigkeit von dem Betriebszustand verwandt. Distal bezeichnet die Richtung axial nach außen betrachtet von der jeweiligen Endlage.

Gemäß dieser Weiterbildung besitzt der Arbeitszylinder durch die weitere Ausnehmung an der Zylinderrohrinnenwand in der gegenüberliegenden Endlage den Vorteil, in den beiden Endlagen jeweils ein Überströmen zu ermöglichen. Es gelten die Beschreibungsinhalte zu dem Überströmbetriebszustand für den weiteren Überströmbetriebszustand und die Beschreibungsinhalte zu dem Hubbetriebszustand für den weiteren Hubbetriebszustand in entsprechender Weise.

So können die Vorteile aus dem in Anspruch 1 erwähnten Überströmen des Druckmediums sowohl im ausgefahrenen als auch im eingefahrenen Kolbenzustand genutzt werden. Insbesondere das parallele Aus- und Einfahren mehrerer paralleler Zylinder oder Zylinder in Master-Slave-Anordnungen wird so bis zum Erreichen der Endlage aller Zylinder garantiert.

Nach einer anderen vorteilhaften Weiterbildung des Arbeitszylinders mit Druckmediumüberströmung nach einem der vorhergehenden Ansprüche ist dieser dadurch gekennzeichnet, dass ein Querschnitt des Kolbenringspalts kleiner ist als der Überströmungsquerschnitt oder der weitere Überströmungsquerschnitt.

Die Belastung der eingesetzten Dichtung durch den Druck des Druckmediums kann dadurch minimiert werden. Die Druckbegrenzung durch den definierten Ringspalt des Kolbenrings entlastet die Dichtung, da beim Überströmen an der Dichtung das Druckmittelmedium nur noch in geringem Maße geschert wird. Aufgrund der geringen Scherung ist die Reibung und die Temperaturänderung beim Überströmen der Dichtung minimiert. Das wiederum führt zu einer erhöhten Lebensdauer der Dichtung und garantiert ein gleichbleibendes Überströmverhalten. Etwaige höhere Belastungen durch die Drosselwirkung des Kolbenringspalts am Kolbenring sind unbedenklich, da es sich um ein robustes Bauteil handelt. Vorteilhaft kann die Durchflussmenge sehr präzise und in konstruktiv einfacher Weise durch den Kolbenringspalt eingestellt werden.

Insbesondere kann eine für die Schaltventile notwendige geringe Durchflussmenge bereitgestellt werden. Diese kann notwendig sein, um den Schaltvorgang bei hydraulisch betätigten Schaltventilen auszulösen. So wird aufgrund des geregelten Druckmittelüberstroms ein zuverlässiger Schaltvorgang der Ventile garantiert.

Gemäß einer anderen vorteilhaften Weiterbildung des Arbeitszylinders mit Druckmediumüberströmung nach einem der vorhergehenden Ansprüche ist dieser dadurch gekennzeichnet, dass die Ausnehmung oder die weitere Ausnehmung als kaltgeformter Prägeformungsabschnitt ausgebildet ist.

Um den Bearbeitungsaufwand des Zylinderrohrs in der Fertigung zu optimieren und preisgünstig zu gestalten, kann die Ausnehmung als kaltgeformte Prägung eingebracht werden. Das hat zudem den Vorteil, dass keine Späne oder ein Fertigungsgrat im Zylinderrohr zurückbleiben, was jeweils eine Schädigung der Dichtung im Betrieb zur Folge haben könnte. Die Lebensdauer der Dichtung wird gemäß dieser Weiterbildung zusätzlich erhöht. Durch die zusätzliche Verdichtung des Materialgefüges an der Querschnittsverringerung an der Ausnehmung kann eine gleichbleibende Festigkeit des Zylinderrohrs aufrechterhalten werden. Vorteilhaft kann eine entsprechend geringere Manteldicke des Zylinderrohrs eingesetzt werden. Etwaige sonst vorzusehende Zulagen wegen einer Schwächung durch eine spanend ausgebildete Ausnehmung können nach dieser Weiterbildung vorteilhaft entfallen.

Die Erfindung wird als Ausführungsbeispiel anhand von
- Fig. 1: Schematische Schnittdarstellung des Arbeitszylinders mit Druckmedienüberströmung
- Fig. 2: Schematische Darstellung der Betriebszustände
- Fig. 3: Schematische Schnittdarstellung als Detailansicht in dem Überströmbetriebszustand - Detail A.1
- Fig. 4: Schematische Schnittdarstellung als Detailansicht in dem Hubbetriebszustand - Detail A.2
- Fig. 5: Schematische Schnittdarstellung als Detailansicht in dem weiteren Überströmbetriebszustand - Detail B.1
- Fig. 6: Schematische Schnittdarstellung als Detailansicht in dem weiteren Hubbetriebszustand - Detail B.2
näher erläutert.

Hierbei beziehen sich gleiche Bezugszeichen in den verschiedenen Figuren auf jeweils gleiche Merkmale oder Bauteile. Die Bezugszeichen werden in der Beschreibung auch dann verwandt, sofern sie in der betreffenden Figur nicht dargestellt sind.

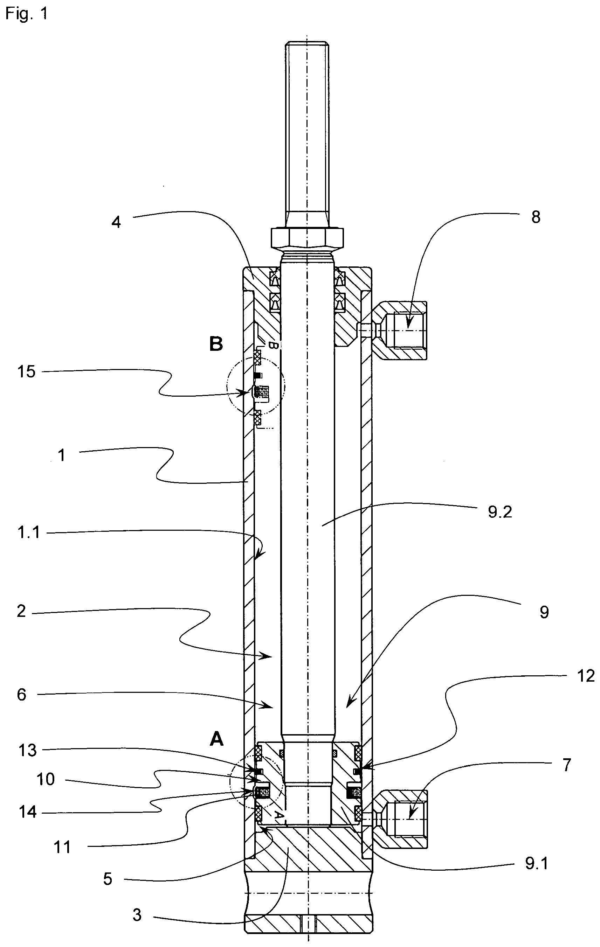

Die Figur 1 stellt ein Ausführungsbeispiel des Arbeitszylinders mit Drucküberströmung in einer schematischen Schnittdarstellung dar. In dem vorliegenden Ausführungsbeispiel liegt der Arbeitszylinder in der vorteilhaften Weiterbildung vor, in der eine Überströmung in beiden Endlagen möglich ist.

Abgebildet ist der Arbeitszylinder mit dem Zylinderrohr 1, das - axial jeweils begrenzt durch die beiden Verschlussteile 3, 4 - einen Innenraum 2 ausbildet. In dem Ausführungsbeispiel ist das erste Verschlussteil 3 als Bodenverschlussteil und das zweite Verschlussteil 4 als Führungsverschlussteil ausgebildet.

Die Kolbeneinheit 9 besteht aus der Kolbenstange 9.2 und dem Kolben 9.1. Der Kolben 9.1 ist in dem Innenraum 2 linear beweglich gelagert. Der Kolben 9.1 teilt hierbei den Innenraum 2 des Arbeitszylinders in zwei Arbeitsräume 5, 6 in denen je nach Hubrichtung das Druckmedium einströmt oder verdrängt wird. Eine Dichtung 11 grenzt die beiden Arbeitsräume 5, 6 dichtend voneinander ab. Das Ein- bzw. Ausströmen des Druckmediums in den jeweiligen Arbeitsraum 5, 6 erfolgt durch den jeweiligen, dem Arbeitsraum 5, 6 zugeordneten Druckmittelanschluss 7, 8. Der erste Druckmittelanschluss 7 ist dem ersten Arbeitsraum 5, hier vorliegend als Kolbenraum, und der zweite Druckmittelanschluss 8 ist dem zweiten Arbeitsraum, hier vorliegenden als Kolbenstangenraum, zugeordnet.

In der ersten Innenringnut 10 des Kolbens 9.1 ist die Dichtung 11 angeordnet, die hier als O-Ring aus einem Elastomer ausgebildet ist. Die erste Innenringnut 10 ist in der axialen Breite größer als die Breite der Dichtung 11 ausgeführt, sodass die Dichtung 11 in axialer Richtung verschiebbar ist.

Ferner weist der Kolben 9.1 eine zweite Innenringnut 12 auf. In dieser ist ein Kolbenring 13 montiert. Der Kolbenring 13 besitzt als eine Überströmmöglichkeit für das Druckmedium einen Kolbenringspalt 13.1.

In dem Endabschnitt des Zylinderrohrs 1, der dem ersten Verschlussteil 3 zugewandt ist, befindet sich in der Zylinderrohrinnenwandung 1.1 die Ausnehmungen 14. An dem gegenüberliegenden Endabschnitt des Zylinderrohr, dem zweiten Verschlussteil 4 zugeordnet, ist die weitere Ausnehmung 15 eingebracht. Je nach Bewegungsrichtung des Kolbens 9.1 wird am Hubende durch die Positionierung der Dichtung 11 gegenüber der Ausnehmung 14 oder der weiteren Ausnehmung 15 eine Überströmmöglichkeit für das Druckmediums bereitgestellt.

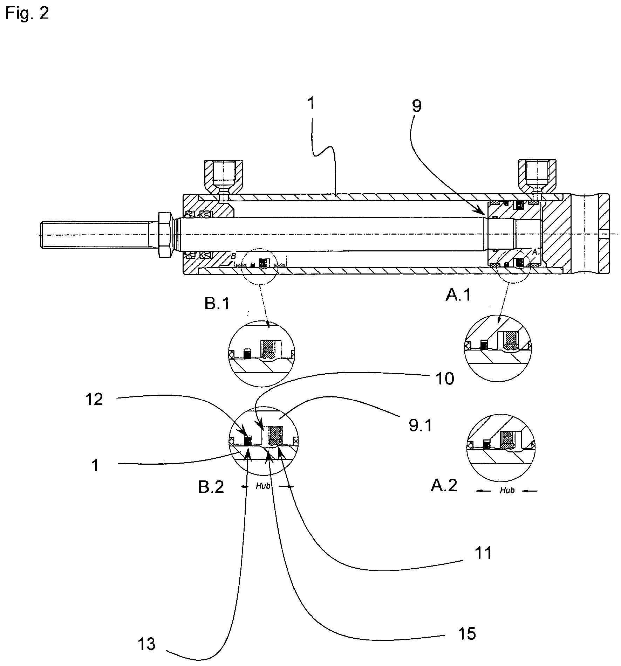

Die Figur 2 zeigt in einer schematischen Ablauf-Bildfolge die unterschiedlichen Betriebszustände des Arbeitszylinders. Hierbei wird zugleich die Zuordnung der Vergrößerungsausschnitte, bezeichnet als A und B, dargestellt.

Wird der Kolben in eine Endlage gefahren, fährt die Dichtung 11 über die Ausnehmung 14, 15 in der Zylinderrohrinnenwandung 1.1. Demzufolge wird dem Druckmedium die Möglichkeit gegeben, über die Ausnehmung 14, 15 zwischen den beiden Arbeitsräumen 5, 6 überzuströmen. Wechselt die Einströmrichtung des Druckmediums, sodass sich die Hubbewegung des Arbeitszylinders umkehrt, verschiebt sich die Dichtung 11 in der ersten Innenringnut 10. Dadurch liegt die Dichtung 11 mit ihrer äußeren radialen Begrenzung wieder umlaufend an der Zylinderrohrinnenwandung 1.1 an und die Arbeitsräume 5, 6 sind wieder gegeneinander abgedichtet. Die Hubbewegung des Kolbens 9.1 wird ohne Druckmittelüberströmung bis zur nächsten Endlage fortgesetzt.

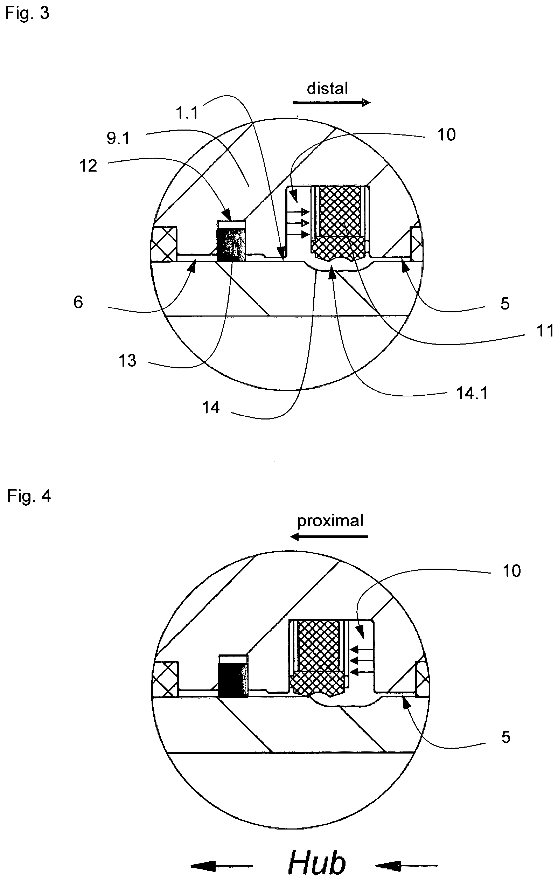

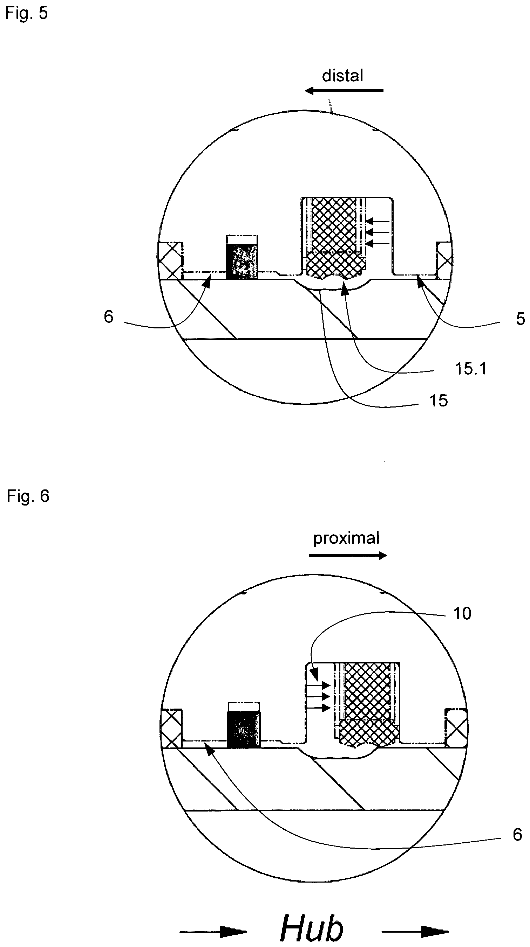

Im Einzelnen wird dies nachfolgend anhand der Fig. 3 bis 6 in schematischen Schnittdarstellung eines Ausschnitt des Kolbens 9.1 und der Zylinderrohrinnenwandung 1.1 im Bereich des Kolbenrings 13 und der Dichtung 11 über der jeweiligen Ausnehmung 14, 15 dargestellt. Dabei beziehen sich die Fig. 3 und 4 auf die Hubendlage an dem ersten Verschlussteil 3 und die Fig. 5 und 6 auf die weitere Hubendlage an dem Verschlussteil 4. Die Fig. 3 und 5 stellen die beiden Überströmbetriebszustände dar. Die Fig. 4 und 6 zeigen, an ihrem jeweiligen Beginn, die beiden Hubbetriebszustände.

Die Figur 3 zeigt mit dem Detail A.1 den Arbeitszylinder in dem Überströmbetriebszustand. Der Kolben 9.1 befindet sich in der Endlage am ersten Verschlussteil 3. Die Dichtung 11 ist in der ersten Innenringnut 10 axial verschiebbar gelagert. Bedingt durch den Überdruck im zweiten Arbeitsraum 6 liegt die Dichtung 11 hier an der distalen Spielendlage an der in Richtung des ersten Verschlussteils 3 an der distalen Seitenwandung der ersten Innenringnut 11 an. Der Überdruck ist in den Fig. 3 bis 6 dargestellt durch die drei parallelen Pfeile in dem freien Bewegungsraum der ersten Innenringnut 10.

Über den Kolbenringspalt 13.1 des Kolbenrings 13 und nachfolgend über den Überströmquerschnitt 14.1, der sich radial zwischen der Dichtung 11 und der Ausnehmung 14 ausgebildet hat, kann das Druckmedium in den ersten Arbeitsraum 5 überströmen. Dies stellt den Überströmkanal dar. Hierbei wird das Druckmedium durch den definierten Querschnitt des Kolbenringspalt 13.1 gedrosselt und die Dichtung 11 entlastet.

Die Figur 4 zeigt mit dem Detail A.2 den Hubbetriebszustand. Hierbei liegt der Hubbetriebszustand an seinem Beginn vor. Der Kolben 9.1 befindet sich noch ein der Endlage am ersten Verschlussteil 3. Durch den ersten Druckmittelanschluss 7 strömt Druckmittel in den ersten Arbeitsraum 5. Durch den Überdruck wird die Dichtung 11 axial in Richtung des zweiten Verschlussteils 4 verschoben und an die proximale Seitenwandung der ersten Innenringnut 10 gepresst. Hierdurch liegt die äußere radiale Begrenzung der Dichtung 11 nicht mehr direkt axial gegenüber der Ausnehmung 14, sondern zumindest abschnittsweise wieder an der Zylinderrohrinnenwandung 1.1 an. Damit sind die beiden Arbeitsräume 5, 6 wieder dichtend getrennt und der Hub kann ohne Überströmung ausgeführt werden.

Die Figur 5 zeigt mit dem Detail B.1 den Arbeitszylinder in dem weiteren Überströmbetriebszustand. Der Kolben 9.1 befindet sich in der Endlage am zweiten Verschlussteil 4. Durch den Überdruck im ersten Arbeitsraum 5 liegt die Dichtung 11 hier an der distalen Spielendlage an der in Richtung des zweiten Verschlussteils 4 an der in dieser Richtung distalen Seitenwandung der ersten Innenringnut 11 an.

Die Dichtung steht axial gegenüber der weiteren Ausnehmung 15, so dass die äußere radiale Begrenzung dort die Zylinderinnenwandung nicht mehr umlaufend erreicht und sich der weitere Überströmungsquerschnitt 15.1 ausbildet.

Über den weiteren Überströmquerschnitt 15.1, der sich radial zwischen der Dichtung 11 und der Ausnehmung 15 ausgebildet hat und nachfolgend über den Kolbenringspalt 13.1 des Kolbenrings 13 kann das Druckmedium aus dem ersten Arbeitsraum 5 in den zweiten Arbeitsraum 6 überströmen. Dies stellt den weiteren Überströmkanal dar. Auch bei dieser umgekehrten Überströmungsrichtung wird das Druckmedium durch den definierten Querschnitt des Kolbenringspalt 13.1 gedrosselt und die Dichtung 11 entlastet.

Die Figur 6 zeigt mit dem Detail B.2 den weiteren Hubbetriebszustand. Hierbei liegt der weitere Hubbetriebszustand an seinem Beginn vor. Der Kolben 9.1 befindet sich noch ein der Endlage am zweiten Verschlussteil 4. Durch den zweiten Druckmittelanschluss 8 strömt Druckmittel in den ersten Arbeitsraum 6. Durch den Überdruck wird die Dichtung 11 axial in Richtung des ersten Verschlussteils 3 verschoben und an die proximale Seitenwandung der ersten Innenringnut 10 gepresst. Hierdurch liegt die äußere radiale Begrenzung der Dichtung 11 nicht mehr direkt axial gegenüber der weiteren Ausnehmung 15, sondern zumindest abschnittsweise wieder an der Zylinderrohrinnenwandung 1.1 an. Damit sind die beiden Arbeitsräume 5, 6 wieder dichtend getrennt und der Hub kann ohne Überströmung ausgeführt werden.

### Verwendete Bezugszeichen

- 1: Zylinderrohr
- 1.1: Zylinderrohrinnenwandung
- 2: Innenraum
- 3: erstes Verschlussteil
- 4: zweites Verschlussteil
- 5: erster Arbeitsraum
- 6: zweiter Arbeitsraum
- 7: erster Druckmittelanschluss
- 8: zweiter Druckmittelanschluss
- 9: Kolbeneinheit
- 9.1: Kolben
- 9.2: Kolbenstange
- 10: erste Innenringnut
- 11: Dichtung
- 12: zweite Innenringnut
- 13: Kolbenring
- 13.1: Kolbenringspalt
- 14: Ausnehmung
- 15: weitere Ausnehmung

## Patentansprüche

1. Arbeitszylinder mit Druckmediumüberströmung,
aufweisend ein Zylinderrohr (1), ein erstes und ein zweites Verschlussteil (3, 4), einen Innenraum (2), einen ersten und einen zweiten Arbeitsraum (5, 6), einen ersten und zweiten Druckmittelanschluss (7, 8) und eine Kolbeneinheit (9),
wobei der Innenraum (2) durch das Zylinderrohr (1) und die Verschlussteile (3, 4) ausgebildet wird,
wobei der erste Druckmittelanschluss (7) dem ersten Arbeitsraum (5) und der zweite Druckmittelanschluss (8) dem zweiten Arbeitsraum (6) zugeordnet ist,
wobei die Kolbeneinheit (9) einen angeordneten Kolben (9.1) und eine Kolbenstange (9.2) aufweist und der Kolben (9.1) in dem Innenraum angeordnet ist, dort den ersten und den zweiten Arbeitsraum (5, 6) ausbildet und eine umlaufenden erste Innenringnut (10) sowie eine in der ersten Innenringnut (10) angeordnete Dichtung (11) aufweist, die an einer Zylinderinnenwandung (1.1) des Zylinderrohrs (1) anliegt und den ersten und den zweiten Arbeitsraum (5, 6) voneinander trennt,
wobei die Dichtung (11) in der ersten Innenringnut (10) ein axiales Bewegungsspiel aufweist,
wobei der Kolben (9.1) eine umlaufende zweite Innenringnut (12) sowie einen in der zweiten Innenringnut (12) angeordneten Kolbenring (13) aufweist, der federn an der Zylinderrohrinnenwandung (1.1) anliegt und einen Kolbenringspalt (13.1) aufweist,
wobei das Zylinderrohr (1) an der Zylinderrohrinnenwandung (1.1) eine Ausnehmung (14) aufweist die axial so angeordnet ist, dass diese in einer Endlage des Kolbens (9.1) an dem ersten Verschlussteil (3) der ersten Innenringnut (10) gegenüber positioniert ist,
wobei der Arbeitszylinder für einen Überströmbetriebszustand und für einen Hubbetriebszustand ausgebildet ist, und wobei in dem Überströmbetriebszustand der Kolben (9.1) in einer Endlage an dem ersten Verschlussteil (3) positioniert ist, die Dichtung (11) mittels einer Druckbeaufschlagung des zweiten Arbeitsraums (6) in einer in Richtung des ersten Verschlussteils (3) distalen Spielendlage ihres axialen Bewegungsspiels positioniert ist und ein Überströmungsquerschnitt (14.1) zwischen einer radialen Begrenzung der Dichtung (11) und der Ausnehmung (14) geöffnet ist und ein Überströmkanal von dem zweiten Druckmittelanschluss (8), über den zweiten Arbeitsraum (6), über den Überströmungsquerschnitt (14.1) und den Kolbenringspalt (13.1), über den ersten Arbeitsraum (5) zu dem ersten Druckmittelanschluss (7) geöffnet ist, sowie wobei in dem Hubbetriebszustand die Dichtung (11) mittels einer Druckbeaufschlagung des ersten Arbeitsraums (5) in einer der distalen Spielendlage gegenüberliegenden proximalen Spielendlage positioniert ist und der Überströmquerschnitt und der Überströmkanal geschlossen sind.

2. Arbeitszylinder mit Druckmediumüberströmung nach Anspruch 1,
**dadurch gekennzeichnet,**
**dass** das Zylinderrohr (1) an der Zylinderrohrinnenwandung (1.1) eine weitere Ausnehmung (15) aufweist die axial so angeordnet ist, dass diese in einer Endlage des Kolbens (9.1) an dem zweiten Verschlussteil (4) der ersten Innenringnut (10) gegenüber positioniert ist,
**dass** der Arbeitszylinder für einen weiteren Überströmbetriebszustand und für einen weiteren Hubbetriebszustand ausgebildet ist,
und **dass** in dem weiteren Überströmbetriebszustand der Kolben (9.1) in einer Endlage an dem zweiten Verschlussteil (4) positioniert ist, die Dichtung (11) mittels einer Druckbeaufschlagung des ersten Arbeitsraums (5) in einer in Richtung des zweiten Verschlussteils (4) distalen Spielendlage ihres axialen Bewegungsspiels positioniert ist und ein weiterer Überströmungsquerschnitt (15.1) zwischen der radialen Begrenzung der Dichtung (11) und der weiteren Ausnehmung (15) geöffnet ist und ein weiterer Überströmkanal von dem ersten Druckmittelanschluss (7), über den ersten Arbeitsraum (5), über den weiteren Überströmungsquerschnitt (15.1) und den Kolbenringspalt (13.1), über den zweiten Arbeitsraum (6) zu dem zweiten Druckmittelanschluss (8) geöffnet ist,
sowie dass in dem weiteren Hubbetriebszustand die Dichtung (11) mittels einer Druckbeaufschlagung des zweiten Arbeitsraums (6) in einer der weiteren distalen Spielendlage gegenüberliegenden weiteren proximalen Spielendlage positioniert ist und der weitere Überströmquerschnitt (15.1) und der weitere Überströmkanal geschlossen sind.

3. Arbeitszylinder mit Druckmediumüberströmung nach einem der vorhergehenden Ansprüche,
**dadurch gekennzeichnet,**
**dass** ein Querschnitt des Kolbenringspalts (13.1) kleiner ist als der Überströmungsquerschnitt (14) oder der weitere Überströmungsquerschnitt (15)

4. Arbeitszylinder mit Druckmediumüberströmung nach einem der vorhergehenden Ansprüche,
**dadurch gekennzeichnet,**
**dass** die Ausnehmung (14) oder die weitere Ausnehmung (15) als kaltgeformter Prägeformungsabschnitt ausgebildet ist

## Claims

1. A working cylinder with pressure medium overflow,
comprising a cylinder tube (1), a first and a second closure part (3, 4), an interior (2), a first and a second working chamber (5, 6), a first and a second pressure medium connection (7, 8) and a piston unit (9),
wherein the interior (2) is formed by the cylinder tube (1) and the closure parts (3, 4),
wherein the first pressure medium connection (7) is assigned to the first working chamber (5) and the second pressure medium connection (8) is assigned to the second working chamber (6),
wherein the piston unit (9) has an arranged piston (9.1) and a piston rod (9.2), and the piston (9.1) is arranged in the interior, forms the first and the second working chamber (5, 6) there and has a circumferential first inner ring groove (10) and a seal (11) which is arranged in the first inner ring groove (10) and rests against a cylinder inner wall (1.1) of the cylinder tube (1) and separates the first and the second working chamber (5, 6) from each another,
wherein the seal (11) in the first inner ring groove (10) has an axial movement clearance,
wherein the piston (9.1) has a circumferential second inner ring groove (12) and a piston ring (13), being arranged in the second inner ring groove (12), which rests resiliently against the inner wall of the cylinder tube (1.1) and has a piston ring gap (13.1),
wherein the cylinder tube (1) has a recess (14) in the inner wall of the cylinder tube (1.1) which is arranged axially in such a manner that it is positioned opposite the first inner ring groove (10) in an end position of the piston (9.1) at the first closure part (3),
wherein the working cylinder is designed for an overflow operating state and for a stroke operating state,
and wherein in the overflow operating state the piston (9.1) is positioned in an end position at the first closure part (3), the seal (11) is positioned in a distal clearance end position of its axial movement in a direction of the first closure part (3) by means of pressurization of the second working chamber (6), and an overflow cross section (14.1) is opened between a radial limit of the seal (11) and the recess (14), and an overflow channel is opened from the second pressure medium connection (8) via the second working chamber (6), via the overflow cross section (14.1) and the piston ring gap (13.1) and via the first working chamber (5) up to the first pressure medium connection (7),
and wherein, in the stroke operating state, the seal (11) is positioned in a proximal clearance end position opposite the distal clearance end position by means of pressurization of the first working chamber (5), and the overflow cross section and the overflow channel are closed.

2. The working cylinder with pressure medium overflow according to claim 1, **characterized in**
**that** the cylinder tube (1) has a further recess (15) in the inner wall of the cylinder tube (1.1), which is arranged axially in such a way that it is positioned opposite the first inner ring groove (10) in an end position of the piston (9.1) at the second closure part (4),
**that** the working cylinder is designed for a further overflow operating state and for a further stroke operating state,
and **that**, in the further overflow operating state,9
the piston (9.1) is positioned in an end position at the second closure part (4), the seal (11) is positioned in a distal clearance end position of its axial movement clearance in the direction of the second closure part (4) by means of pressurization of the first working chamber (5), and a further overflow cross section (15. 1) is opened between the radial limit of the seal (11) and the further recess (15), and a further overflow channel is opened from the first pressure medium connection (7) via the first working chamber (5), via the further overflow cross section (15.1) and the piston ring gap (13.1) and via the second working chamber (6) up to the second pressure medium connection (8),
and **that**, in the further stroke operating state, the seal (11) is positioned in a further proximal clearance end position opposite the further distal clearance end position by means of pressurization of the second working chamber (6), and the further overflow cross section (15.1) and the further overflow channel are closed.

3. The working cylinder with pressure medium overflow according to one of the preceding claims,
**characterized in**
**that** a cross section of the piston ring gap (13.1) is smaller than the overflow cross section (14.1) or the further overflow cross section (15.1).

4. The working cylinder with pressure medium overflow according to one of the preceding claims,
**characterized in**
**that** the recess (14) or the further recess (15) is designed as a cold-formed embossed section.

## Revendications

1. Cylindre de travail avec décharge du fluide sous pression,
comprenant un tube cylindrique (1), un premier et un deuxième élément de fermeture (3, 4), un espace intérieur (2), un premier et un deuxième espace de travail (5, 6), un premier et un deuxième raccord de fluide sous pression (7, 8) et une unité de piston (9),
où l'espace intérieur (2) est formé par le tube cylindrique (1) et les éléments de fermeture (3, 4),
où le premier raccord de fluide sous pression (7) est associé au premier espace de travail (5) et le deuxième raccord de fluide sous pression (8) au deuxième espace de travail (6),
où l'unité de piston (9) comporte un piston associé (9.1) et une tige de piston (9.2), le piston (9.1) étant disposé dans l'espace intérieur, où il forme les premier et deuxième espaces de travail (5, 6) et comporte une première rainure annulaire intérieure périphérique (10) ainsi qu'un joint (11) disposé dans la première rainure annulaire intérieure (10), lequel s'appuie contre une paroi intérieure (1.1) du tube cylindrique (1) et sépare les premier et deuxième espaces de travail (5, 6) l'un de l'autre,
où le joint (11) présente un jeu de mouvement axial dans la première rainure annulaire intérieure (10),
où le piston (9.1) comporte une deuxième rainure annulaire intérieure périphérique (12) ainsi qu'un segment de piston (13) disposé dans cette deuxième rainure annulaire intérieure (12), lequel s'appuie élastiquement contre la paroi intérieure du tube cylindrique (1.1) et présente une interstice de segment de piston (13.1),
où le tube cylindrique (1) présente, sur sa paroi intérieure (1.1), un évidement (14) disposé axialement de telle sorte que, lorsque le piston (9.1) se trouve dans sa position finale, cet évidement soit positionné en face du premier élément de fermeture (3) de la première rainure annulaire intérieure (10),
où le cylindre de travail est conçu pour fonctionner en mode de décharge et en mode de levage,
et où, en mode de décharge, le piston (9.1) est positionné dans une position finale au niveau du premier élément de fermeture (3), le joint d'étanchéité (11) est positionné, grâce à une mise sous pression du deuxième espace de travail (6), dans une position finale distale de son jeu de mouvement axial en direction du premier élément de fermeture (3), et une section de fuite (14.1) est ouverte entre une délimitation radiale du joint d'étanchéité (11) et l'évidement (14), et un canal de décharge s'ouvre depuis le deuxième raccord de fluide sous pression (8), en passant par le deuxième espace de travail (6), la section de fuite (14.1) et l'interstice de segment de piston (13.1), puis à travers le premier espace de travail (5) jusqu'au premier raccord de fluide sous pression (7),
et où, en mode de levage, le joint d'étanchéité (11) est positionné, grâce à une mise sous pression du premier espace de travail (5), dans une position finale proximale opposée à la position finale distale, et la section de fuite ainsi que le canal de décharge sont fermés.

2. Cylindre de travail avec décharge du fluide sous pression selon la revendication 1
est **caractérisé en ce**
**que** le tube cylindrique (1) présente, sur sa paroi intérieure (1.1), un autre évidement (15) disposé axialement de telle sorte que, lorsque le piston (9.1) se trouve dans sa position finale, cet évidement soit positionné en face du deuxième élément de fermeture (4) de la première rainure annulaire intérieure (10),
**que** le cylindre de travail est conçu pour fonctionner dans un autre mode de décharge et un autre mode de levage,
et **que** dans l'autre mode de décharge
le piston (9.1) est positionné dans une position finale au niveau du deuxième élément de fermeture (4), le joint d'étanchéité (11) est positionné, grâce à une mise sous pression du premier espace de travail (5), dans une position finale distale de son jeu de mouvement axial en direction du deuxième élément de fermeture (4), et une autre section de fuite (15.1) est ouverte entre la délimitation radiale du joint d'étanchéité (11) et l'autre évidement (15), et un autre canal de décharge s'ouvre depuis le premier raccord de fluide sous pression (7), en passant par le premier espace de travail (5), la section de fuite (15.1) et l'autre interstice de segment de piston (13.1), puis à travers le deuxième espace de travail (6) jusqu'au deuxième raccord de fluide sous pression (8),
et **que** dans l'autre mode de levage, le joint d'étanchéité (11) est positionné, grâce à une mise sous pression du deuxième espace de travail (6), dans une autre position finale proximale opposée à l'autre position finale distale, et l'autre section de fuite et l'autre canal de décharge sont fermés.

3. Cylindre de travail avec décharge du fluide sous pression suivant une des revendications précédentes
est **caractérisé en ce**
**qu'**une section transversale de l'interstice de segment de piston (13.1) est plus petite que la section de fuite (14) ou à l'autre section de fuite (15).

4. Cylindre de travail avec décharge du fluide sous pression suivant une des revendications précédentes
est **caractérisé en ce**
**que** l'évidement (14) ou l'autre évidement (15) est réalisé sous la forme de sections concaves d'estampage formées à froid.
